Europäisches Patentamt

European Patent Office

Office européen des brevets

(19)

(11) Numéro de publication : **0 180 259**
**B1**

(12) # FASCICULE DE BREVET EUROPÉEN

(45) Date de publication du fascicule du brevet :
09.11.88

(51) Int. Cl.⁴ : **B 67 D   1/14, F 16 K  11/074**

(21) Numéro de dépôt : 85201536.1

(22) Date de dépôt : 25.09.85

(54) **Robinet distributeur de liquide, notamment de bière.**

(30) Priorité : 10.10.84 BE 213808

(43) Date de publication de la demande :
07.05.86 Bulletin 86/19

(45) Mention de la délivrance du brevet :
09.11.88 Bulletin 88/45

(84) Etats contractants désignés :
**AT CH DE FR GB IT LI LU NL SE**

(56) Documents cités :
DE-B- 1 053 955
GB-A- 2 106 615

(73) Titulaire : **Ateliers de construction E. Molinet**
**Mulkstraat 4/12**
**B-3300 Tienen (BE)**

(72) Inventeur : **Brenez, Simon**
**Castelberg Getelaan 56**
**B-3300 Tienen (BE)**

(74) Mandataire : **Pieraerts, Jacques et al**
**Bureau Gevers S.A. rue de Livourne 7 bte 1**
**B-1050 Bruxelles (BE)**

## Description

Cette invention concerne un robinet distributeur de liquide, comportant un corps de robinet généralement cylindrique, et une coiffe se raccordant à un corps en forme de manchon, coiffe dans laquelle débouche une conduite d'amenée, ledit corps de robinet servant de plus, de logement, d'une part, à une pièce tournante dans laquelle est logée une conduite de distribution et, d'autre part, à une paire de plaques percées, plaques qui sont disposées dans le corps de robinet, entre la conduite d'amenée et la conduite de distribution, la plaque la plus proche de la conduite d'amenée étant fixe par rapport au corps de robinet et ayant un orifice disposé dans le prolongement de la conduite d'amenée, tandis que l'autre plaque, fixe par rapport à la pièce tournante précitée, peut être mise en rotation à l'aide d'une manette autour de l'axe géométrique du corps de robinet.

Dans le brevet britannique 2,106,615 est suggéré l'usage de disques en céramique dans un robinet à bière. Quoique l'utilisation de disques en céramique dans des robinets de tous types ait fréquemment été proposée en raison de leur longévité, et de leur excellente étanchéité, les orifices de passage de la bière par ces orifices nécessitent un nettoyage qui doit pouvoir se faire sans démontage du robinet et, de plus, il est nécessaire d'assurer en aval, mais surtout en amont, de ces disques un passage à la bière qui ne présente aucune arrête vive ni rétrécissement, ces défauts faisant naître une mousse plus ou moins abondante.

Pour réaliser, selon l'invention, le premier de ces objectifs, il est prévu un robinet conforme à la revendication 1.

Pour réaliser le second objectif défini ci-dessus, la conduite de distribution et la conduite d'amenée sont constituées en une matière ne réagissant pas aux liquides débités, ni aux produits de nettoyage et de rinçage, chaque conduite étant noyée dans une matière moulable ou injectable formant respectivement la pièce tournante et le corps de robinet précité, ces deux conduites offrant sur tout leur parcours une section sensiblement constante et ne présentant que des courbes douces.

Afin de répondre à un objectif de l'invention, les conduites précitées sont constituées d'un tube en acier inoxydable offrant sur tout leur parcours une section sensiblement constante ne présentant que des courbes douces et sont noyées dans une matière moulable ou injectable.

D'autres détails et avantages de l'invention ressortiront de la description qui sera donnée ci-après d'un robinet distributeur de liquide, selon l'invention.

Cette description n'est donnée qu'à titre d'exemple et ne limite pas l'invention. Les notations de référence se rapportent aux figures ci-annexées.

La figure 1 est une coupe longitudinale du robinet dans la position fermée.

La figure 2 est une coupe selon la ligne II-II de la figure 1.

La figure 3 est une coupe longitudinale du robinet dans la position fermée mais selon un plan de coupe différent de 90° par rapport à celui de la figure 1.

La figure 4 est une coupe longitudinale dans le même plan que celui de la figure 3 mais dans une position permettant le débit.

La figure 5 est une coupe selon la ligne V-V de la figure 4.

Le robinet représenté par ces figures comporte un corps de robinet 1 qui présente une forme généralement cylindrique et se termine à la partie supérieure par une coiffe 2 à laquelle se raccorde un corps en forme de manchon 3. Ces trois pièces forment ce qui sera appelé ci-après le corps de robinet.

La partie cylindrique du corps de robinet 1 emprisonne un cylindre 5 qui retient à la fois la pièce tournante 6 ainsi que deux plaques 7 et 8.

La pièce tournante 6 est solidaire de la couronne 10 sur laquelle est fixée la manette 9, et emprisonne la conduite de distribution 12.

Il est à remarquer que la plaque 8 est solidaire de la pièce tournante 6, tandis que la plaque 7 est solidarisée de la face inférieure du corps de robinet 1.

Chacune des plaques 7 et 8 présente deux orifices désignés respectivement par 13 et 14, ménagés dans la plaque 8, et 15 et 16, ménagés dans la plaque 7.

Quoique pour des raisons d'ordre constructif, les plaques 7 et 8 soient de préférence des disques, le même rôle pourrait être assuré par des plaques de forme différente présentant, par exemple, la forme de demi-lunes.

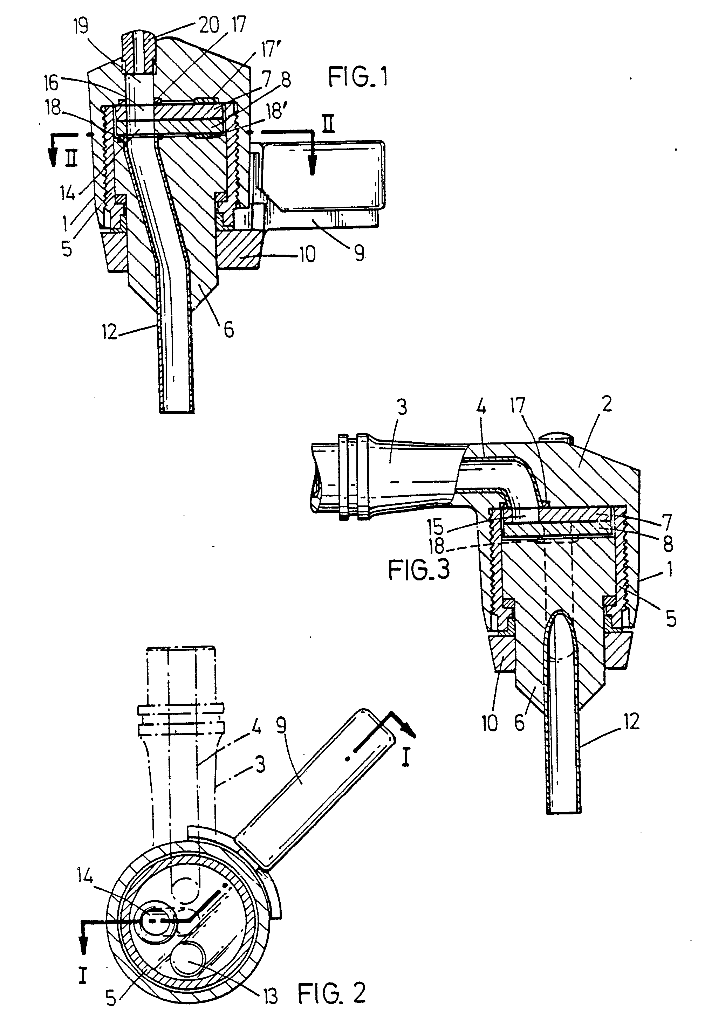

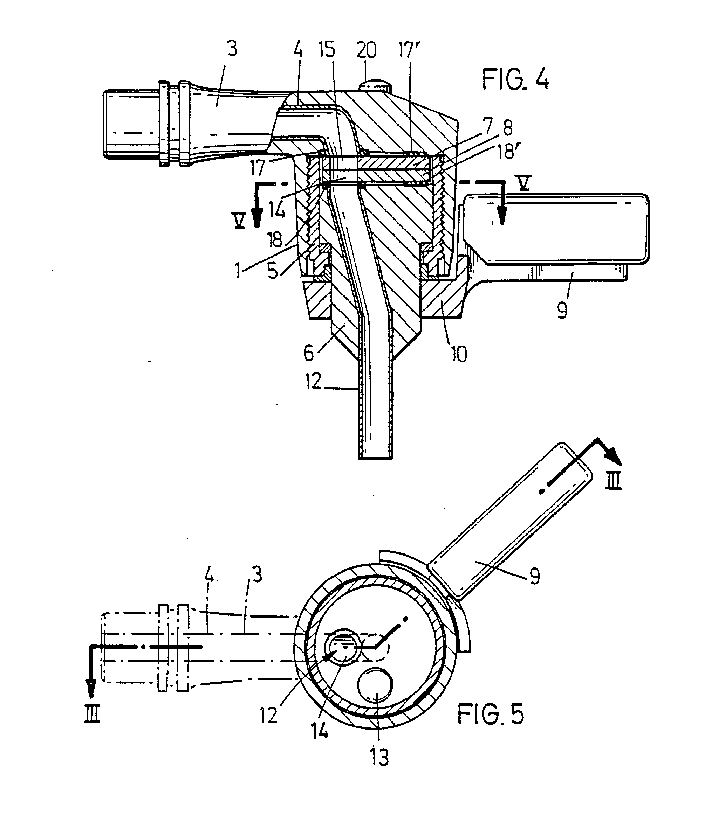

Avant de décrire le fonctionnement du robinet selon l'invention et les avantages remarquables qui le caractérisent, on notera encore que la conduite d'alimentation 4 a son extrémité dirigée vers la plaque 7 équipée d'un joint annulaire 17, tandis qu'à l'inverse, l'extrémité de la conduite de distribution 12 dirigée vers la plaque 8, est, elle également, pourvue d'un joint annulaire 18. En raison de la disposition excentrique aussi bien du joint annulaire 17 et de la conduite d'amenée 4 que du joint annulaire 18 et de la conduite d'évacuation 12 par rapport à la partie cylindrique ou corps de robinet 1, il est nécessaire d'équilibrer les plaques 7 et 8 par deux autres joints 17' et 18' (fig. 1 et 4) et cela aussi bien par rapport à la pièce tournante 6 que par rapport à la surface interne du corps de robinet 1. Ces détails d'ordre constructif sont nécessaires pour maintenir dans leur position correcte les plaques 7 et 8 et les empêcher de se placer de biais dans le logement qui leur est assigné.

A l'examen des figures, on remarquera que la conduite d'évacuation 12, dont la partie inférieure a son axe géométrique disposé exactement dans l'axe géométrique de la pièce rotative 6, est incurvée au cours de son trajet en direction des plaques 8 et 7 et cela de telle sorte que la partie supérieure de la conduite d'évacuation 12 puisse venir se placer exactement dans l'axe de l'orifice par lequel la conduite d'amenée 4 débouche dans le corps de robinet 1. Dans une autre position, la conduite d'évacuation 12 est amenée, après rotation de 90° de la manette 9, à se placer, par son orifice supérieur, dans l'axe géométrique de l'orifice 19. Cet orifice 19, qui traverse le corps de robinet 1, est équipé d'un bouchon 20 qui peut être écarté pour permettre le nettoyage de la conduite d'évacuation 12 et qui est troué pour permettre l'évacuation complète du liquide.

Attendu que les plaques 7 et 8 présentent chacune deux orifices, respectivement 15 et 16, d'une part, et 13 et 14, d'autre part, on saisit immédiatement que, par la rotation de la manette 9, et tenant compte de l'immobilité de la plaque 7 par rapport au corps de robinet 1, alors que la plaque 8 est mise en rotation avec le corps tournant 6, on peut obtenir les positions suivantes :

a) position de débit qui correspond à la mise en alignement de l'orifice de la conduite d'amenée 4, de l'orifice 15 de la plaque 7 et de l'orifice 14 de la plaque 8 ;

b) arrêt du débit et vidange complète de la conduite de distribution 12 en faisant correspondre l'orifice 14 de la plaque 8 avec l'orifice 16 de la plaque 7 et l'orifice 19.

Dans la dernière position détaillée sous le point b) et après éloignement du bouchon troué 20, on se trouve dans une position idéale pour passer à un nettoyage complet et aisé de tous les éléments faisant partie du robinet qui, à quelque titre que ce soit, ont été en contact avec l'air.

Dans la position de nettoyage, qui est celle qui correspond au point b), le débit est à l'arrêt puisque l'orifice de la conduite d'amenée 4 n'est mis en communication ni avec l'orifice 14, ni avec l'orifice 13 de la plaque 8. Il y a donc indépendance totale des deux circuits d'amenée et de distribution et impossibilité de passer d'un circuit à un autre.

Aussi bien la conduite d'amenée 4 que la conduite de distribution 12 seront constituées d'une matière qui ne réagit pas avec l'oxygène, ni avec les produits chimiques de nettoyage et de rinçage. De préférence on fera appel à l'acier inoxydable mais il est évident que d'autres matières inertes peuvent trouver application.

La structure du robinet selon l'invention est caractérisée par le fait que la conduite d'amenée 4 et la conduite de distribution 12 sont noyées dans une matière qui peut être moulée ou injectée. De ce fait elle offre de nombreux avantages qui ne se retrouvent pas dans les structures de robinets où les canalisations d'amenée et/ou d'évacuation sont réalisées par forage dans la matière, de conduits qui, en raison de la technique de réalisation de ceux-ci, présentent des angles ou des arêtes vives. Ces structures propres aux techniques de réalisation appliquées jusqu'à ce jour en matière de robinetterie sont la cause de formation de mousse, principalement lorsqu'il s'agit de débiter de la bière et des boissons analogues. De plus, le nettoyage de ces conduits est rendu extrêmement difficile lorsqu'on fait usage, comme cela se fait régulièrement, de petites éponges qui circulent à contre-courant dans les conduits avec un liquide de rinçage.

Tout au contraire, la section constante et les courbes que peuvent offrir des conduites telles que par exemple des tubes en acier inoxydable, n'offrent aucun des inconvénients qui viennent d'être décrits.

Quant aux plaques 7 et 8, elles se présentent en général sous la forme de disques. Pour obtenir une étanchéité parfaite, il est extrêmement avantageux de les réaliser en une matière céramique. Il est entendu que pour ces pièces on peut faire appel à toute autre matière synthétique ou naturelle permettant d'obtenir une rugosité, un parallélisme et une planéité au moins égale aux qualités obtenues par la céramique.

De la description qui vient d'être donnée du robinet selon l'invention, on notera la solution originale qui est donnée au problème du nettoyage de la partie d'un tel robinet qui est régulièrement en contact avec l'air, c'est-à-dire la partie de la conduite qui se trouve en aval des organes d'obturation.

Au cours du nettoyage de la conduite de distribution 12 et de l'orifice correspondant de la plaque 8, l'étanchéité du robinet est totale et la bière ou le liquide à distribuer demeure sous pression.

En dehors de ces avantages évidents, la réalisation du robinet selon l'invention est d'une très grande simplicité puisque l'inclusion d'une tuyauterie en acier inoxydable ou en une matière analogue dans une matière injectable ou moulable est une solution technique à la fois élégante et simple à réaliser.

De plus, cette solution permet d'une part d'éviter toute formation de mousse lorsque le liquide, en l'occurrence de la bière, circule dans les conduits dont les courbures sont particulièrement douces, et d'autre part, de nettoyer toute la conduite d'une extrémité à l'autre, dans le sens du courant ou à contre-courant.

Cette structure du robinet favorise un nettoyage intégral des conduits permettant ainsi de combattre aisément tout foyer de bactéries. Ceci est essentiellement dû au profil et à la section constante des conduites du robinet.

**Revendications**

1. Robinet distributeur de liquide, comportant un corps de robinet (1) généralement cylindrique, et une coiffe (2) se raccordant à un corps en forme de manchon, coiffe dans laquelle débouche une conduite d'amenée (4), ledit corps de robinet servant de plus, de logement, d'une part, à une pièce tournante (6) dans laquelle est logée une conduite de distribution (12) et, d'autre part, à une paire de plaques (7, 8) percées, chacune, de deux orifices, plaques qui sont disposées dans le corps de robinet, entre la conduite d'amenée (4) et la conduite de distribution (12), la plaque (7) la plus proche de la conduite d'amenée (4) étant fixe par rapport au corps de robinet (1) et disposée avec un de ses orifices dans le prolongement de la conduite d'amenée (4), tandis que l'autre plaque (8), fixe par rapport à la pièce tournante (6) précitée, peut être mise en rotation à l'aide d'une manette (9) autour de l'axe géométrique du corps de robinet, la coiffe précitée (2) présentant un orifice (19) traversant ce corps de robinet selon un axe avec lequel la partie supérieure de l'axe de la conduite de distribution (12) peut coïncider, afin de permettre, après éloignement d'un bouchon (20), le nettoyage de la conduite de distribution (12) au travers du corps de robinet précité et la conduite de distribution précitée (12) ayant son extrémité libre et la partie située en amont de celle-ci étant disposées dans l'axe géométrique de la pièce tournante précitée (6), tandis que l'extrémité opposée de cette même conduite de distribution (12) débouche excentriquement de ladite pièce tournante (6) pour se placer soit dans l'axe de la conduite d'amenée (4), soit dans l'axe de l'orifice précité (19), la partie inférieure de la conduite de distribution (12) étant placée dans l'axe géométrique de la pièce tournante (6).

2. Robinet selon la revendication 1, caractérisé en ce que la conduite de distribution (12) et la conduite d'amenée (4) sont constituées en une matière ne réagissant pas aux liquides débités, ni aux produits de nettoyage et de rinçage, chaque conduite étant noyée dans une matière moulable ou injectable formant respectivement la pièce tournante (6) et le corps de robinet précité (1), ces deux conduites offrant sur tout leur parcours une section sensiblement constante et ne présentant que des courbes douces.

3. Robinet selon la revendication 2, caractérisé en ce que les conduites d'amenée (4) et de distribution (12) sont constituées d'acier inoxydable.

4. Robinet selon la revendication 2, caractérisé en ce que les conduites d'amenée (4) et de distribution (12) sont constituées de verre.

5. Robinet selon la revendication 2, caractérisé en ce que les conduites d'amenée (4) et de distribution (12) sont constituées d'une matière synthétique.

6. Robinet selon l'une quelconque des revendications 1 à 5, caractérisé en ce que les plaques précitées (7) et (8), percées chacune de deux orifices (15, 16 et 13, 14 respectivement) sont des disques.

7. Robinet selon l'une quelconque des revendications 1 à 5, caractérisé en ce que les plaques précitées (7) et (8) présentent la forme d'une demi-lune.

8. Robinet suivant l'une quelconque des revendications 1-7, caractérisé en ce que les plaques précitées sont constituées d'une matière céramique.

9. Robinet selon l'une quelconque des revendications 1-7, caractérisé en ce que les plaques précitées sont constituées de verre.

10. Robinet selon l'une quelconque des revendications 1-7, caractérisé en ce que les plaques précitées sont constituées de matière synthétique ou naturelle.

11. Robinet selon l'une quelconque des revendications 1-7, caractérisé en ce que les plaques précitées sont constituées de métal.

12. Robinet selon l'une quelconque des revendications 1-11, caractérisé en ce que l'étanchéité entre, d'une part, le corps de robinet, comportant la conduite d'amenée (4) et la matière dans laquelle elle est noyée, et la plaque supérieure (7) et, d'autre part, la plaque inférieure (8) et la pièce mobile (6) du robinet comportant la conduite de distribution (12) et la matière dans laquelle cette dernière est noyée, est réalisée à l'aide de deux joints annulaires concentriques par rapport aux orifices ménagés dans les plaques (7) et (8).

13. Robinet selon la revendication 12, caractérisé en ce que les joints précités sont des joints toriques.

14. Robinet selon l'une quelconque des revendications 1-13, caractérisé en ce que l'équilibrage des plaques (7) et (8) par rapport à la partie inférieure du corps de robinet (1), la partie supérieure de la pièce mobile (6) est assurée d'une part par les joints annulaires (17-17') et (18-18') et, d'autre part, par au moins un point d'appui en une matière ayant une structure élastique de même nature que celle des joints annulaires précités.

15. Robinet selon l'une quelconque des revendications 1 à 14, caractérisé en ce que le bouchon (20) est troué, pour permettre l'écoulement du liquide hors de la conduite d'évacuation (12).

**Claims**

1. A dispensing tap for liquids, comprising a tap body (1) of generally cylindrical shape and a cap (2) joining a sleeve-shaped body, into which cap opens a feed conduit (4), said tap body serving in addition to accomodate, firstly, a rotating part (6) into which is lodged a dispensing duct (12) and, secondly, a pair of perforated plates (7, 8), each of said plates having two orifices, said plates being disposed in the tap body between the feed conduit (4) and the dispensing duct (12), the plate (7) closest to the feed conduit (4) being fixed relative to the tap body (1) and disposed with one of its orifices in continuation of the feed conduit (4), whilst the other plate (8), fixed relative to the said rotating part (6), can be caused to rotate with the help of a handle (9) about the geometric axis of the tap body, the aforesaid cap (2) having an orifice (19) passing through the tap body along an axis with which the upper part of the axis of the dispensing duct (12) may coincide, in order to make possible, after removal of a plug (20), the cleaning of the dispensing duct (12) through the aforesaid tap body, and the aforesaid dispensing duct (12) having its free extremity and the part located upstream thereof being disposed in the geometric axis of the said rotating part (6), whilst the opposite extremity of this same dispensing duct (12) opens eccentrically from said rotating part (6) to place itself either in the axis of the feed conduit (4) or in the axis of the aforesaid orifice (19), the lower part of the dispensing duct (12) being placed in the geometric axis of the rotating part (6).

2. A tap according to Claim 1, characterised in that the dispensing duct (12) and the feed conduit (4) are made of a material which does not react with the dispensed liquids, nor with the cleaning and rinsing agents, each conduit being embedded in a material suitable for moulding or injection-forming constituting, respectively, the rotating part (6) and the aforesaid tap body (1), these two conduits having over their entire length a substantially constant cross-section and only slight bends.

3. A tap according to Claim 2, characterised in that these feed conduit (4) and dispensing duct (12) are made of stainless steel.

4. A tap according to Claim 2, characterised in that the feed conduit (4) and the dispensing duct (12) are made of glass.

5. A tap according to Claim 2, characterised in that the feed conduit (4) and the dispensing duct (12) are made of a synthetic material.

6. A tap according to any one of Claims 1 to 5, characterised in that the aforesaid plates (7) and (8), each pierced by two orifices (15, 16 and 13, 14, respectively) are disks.

7. A tap according to any one of Claims 1 to 5, characterised in that the aforesaid plates (7) and (8) have a half-moon shape.

8. A tap according to any one of Claims 1 to 7, characterised in that the aforesaid plates are made of a ceramic material.

9. A tap according to any one of Claims 1 to 7, characterised in that the aforesaid plates are made of glass.

10. A tap according to any one of Claims 1 to 7, characterised in that the aforesaid plates are made of a synthetic or natural material.

11. A tap according to any one of Claims 1 to 7, characterised in that the aforesaid plates are made of metal.

12. A tap according to any one of Claims 1 to 11, characterised in that the sealing between, respectively, the tap body comprising the feed conduit (4) and the material into which it is embedded, and the upper plate (7) and, on the other hand, the lower plate (8) and the movable part (6) of the tap comprising the dispensing duct (12) and the material into which the latter is embedded, is realized with the aid of two annular joints which are concentric relative to the orifices formed in the plates (7) and (8).

13. A tap according to Claim 12, characterised in that the said joints are toroidal joints.

14. A tap according to any one of Claims 1 to 13, characterised in that the balancing of the plates (7) and (8) relative to the lower portion of the tap body (1), the upper part of the movable part (6) is effected, on one hand, by means of the annular joints (17-17') and (18-18') and, on the other hand by at least one support point made of a material having an elastic structure of the same nature as the aforesaid annular joints.

15. A tap according to any one of Claims 1 to 14, characterised in that the plug (20) is perforated to allow the liquid to flow out of the discharge duct (12).

**Patentansprüche**

1. Schieber für die Abgabe einer Flüssigkeit, mit einem im wesentlichen zylindrischen Schieberkörper (1) und einer Kappe (2), welche mit diesem zu einem buchsenförmigen Körper verbunden ist und in welcher eine Zufuhrleitung (4) ausmündet, wobei der Schieberkörper ferner der Unterbringung einerseits eines drehbaren Teils (6), in welchem eine Abgabeleitung (12) angeordnet ist, und andererseits eines Paares jeweils von zwei Öffnungen durchsetzter Platten (7, 8) dient, welche im Schieberkörper zwischen der Zufuhrleitung (4) und der Abgabeleitung (12) angeordnet sind, wobei die näher der Zufuhrleitung (4) angeordnete Platte (7) in bezug auf den Schieberkörper (1) festgelegt und mit einer ihrer Öffnungen in Verlängerung der Zufuhrleitung (4) angeordnet ist, während die andere Platte (8) in bezug auf das drehbare Teil (6) festgelegt und mit Hilfe eines Handgriffs (9) um die geometrische Achse des Schiebers in Drehung versetzbar ist, wobei ferner die genannte Kappe (2) eine Öffnung (19) aufweist, welche den Schieberkörper entlang einer Achse durchsetzt, mit welcher das obere Teil der Achse der Abgabeleitung (12) in Ausrichtung bringbar ist, um nach Entfernen eines Stopfens (20) die Reinigung der Abgabeleitung (12) durch den genannten Schieberkörper hindurch zu ermöglichen, und wobei das freie Ende und der zulaufseitig daran anschließende Abschnitt der Abgabeleitung (12) entlang der geometrischen Achse des genannten drehbaren Teils (6) angeordnet sind, während das gegenüberliegende Ende derselben genannten Abgabeleitung (12) exzentrisch aus dem genannten drehbaren Teil (6) ausmündet, so daß es wahlweise auf die Achse der Zufuhrleitung (4) oder auf die Achse der genannten Öffnung (19) ausrichtbar ist, während das untere Teil der Abgabeleitung (12) entlang der geometrischen Achse des drehbaren Teils (6) angeordnet ist.

2. Schieber nach Anspruch 1, dadurch gekennzeichnet, daß die Abgabeleitung (12) und die Zufuhrleitung (4) aus einem Werkstoff gebildet sind, welcher nicht mit den abgegebenen Flüssigkeiten noch mit Reinigungs- und Spülmitteln reagiert, und daß jede Leitung in einem formbaren oder spritzformbaren Werkstoff eingebettet ist, aus welchem des drehbare Teil (6) bzw. der genannte Schieberkörper (1) geformt sind, wobei die beiden Leitungen über ihren gesamten Verlauf einen im wesentlichen konstanten Querschnitt haben und allenfalls nur sanfte Krümmungen aufweisen.

3. Schieber nach Anspruch 2, dadurch gekennzeichnet, daß die Zufuhrleitung (4) und die Abgabeleitung (12) aus rostfreiem Stahl gebildet sind.

4. Schieber nach Anspruch 2, dadurch gekennzeichnet, daß die Zufuhrleitung (4) und die Abgabeleitung (12) aus Glas gebildet sind.

5. Schieber nach Anspruch 2, dadurch gekennzeichnet, daß die Zufuhrleitung (4) und die Abgabeleitung (12) aus einem Kunststoff gebildet sind.

6. Schieber nach einem der Ansprüche 1 bis 5, dadurch gekennzeichnet, daß die genannten Platten (7, 8) als von jeweils zwei Öffnungen (15, 16 bzw. 13, 14) durchsetzte Scheiben ausgebildet sind.

7. Schieber nach einem der Ansprüche 1 bis 5, dadurch gekennzeichnet, daß die genannten Platten (7, 8) jeweils die Form eines Halbmonds aufweisen.

8. Schieber nach einem der Ansprüche 1 bis 7, dadurch gekennzeichnet, daß die genannten Platten aus einem keramischen Werkstoff gebildet sind.

9. Schieber nach einem der Ansprüche 1 bis 7, dadurch gekennzeichnet, daß die genannten Platten aus Glas gebildet sind.

10. Schieber nach einem der Ansprüche 1 bis 7, dadurch gekennzeichnet, daß die genannten Platten aus einem Kunststoff oder einem natürlichen Werkstoff gebildet sind.

11. Schieber nach einem der Ansprüche 1 bis 7, dadurch gekennzeichnet, daß die genannten Platten aus Metall gebildet sind.

12. Schieber nach einem der Ansprüche 1 bis 11, dadurch gekennzeichnet, daß die Dichtigkeit zwischen einerseits dem. Schieberkörper mit der Zufuhrleitung (4), dem Werkstoff, in welchem diese eingebettet ist, und der oberen Platte (7) und andererdeits der unteren Platte (8) und dem beweglichen Teil (6) des Schiebers mit der Abgabeleitung (12) und dem Werkstoff, in welchem diese eingebettet ist, durch zwei ringförmige Dichtungen gewährleistet ist, welche konzentrisch mit den in den Platten (7) und (8) ausgebildeten Öffnungen angeordnet sind.

13. Schieber nach Anspruch 12, dadurch gekennzeichnet, daß die genannten Dichtungen torusförmig ausgebildet sind.

14. Schieber nach einem der Ansprüche 1 bis 13, dadurch gekennzeichnet, daß die Balance der Platten (7) und (8) in bezug auf das untere Teil des Schieberkörpers (1) und das obere Teil des beweglichen Teils (6) einerseits durch die ringförmigen Dichtungen (17-17' und 18-18') und andererseits durch wenigstens einen Abstützpunkt aus einem Werkstoff, welcher die gleichen elastischen Eigenschaften aufweist wie der der genannten ringförmigen Dichtungen, gewährleistet ist.

15. Schieber nach einem der Ansprüche 1 bis 14, dadurch gekennzeichnet, daß der genannte Stopfen (20) durchbohrt ist, um den Abfluß der Flüssigkeit aus der Abgabeleitung (12) zu ermöglichen.

0 180 259

FIG.1

FIG.3

FIG. 2

FIG. 4

FIG. 5

2